# EUROPEAN PATENT SPECIFICATION

(11) **EP 2 693 746 B1**
(45) Date of publication and mention of the grant of the patent: **30.09.2015**
(21) Application number: 12305965.1
(22) Date of filing: 03.08.2012
(51) Int. Cl.: H04N 7/15, G06F 3/00, G06F 3/01

(54) **Method and apparatus for enabling visual mute of a participant during video conferencing**
Verfahren und Vorrichtung zur Ermöglichung der visuellen Stummschaltung eines Teilnehmers während einer Videokonferenz
Procédé et appareil permettant de mettre en sourdine visuelle un participant pendant une vidéoconférence

(43) Date of publication of application: 05.02.2014
(73) Proprietor: ALCATEL LUCENT, 92100 Boulogne-Billancourt (FR)
(72) Inventor: Lievens, Sammy, 2930 Brasschaat (BE); Tytgat, Donny, 9860 Oosterzele (BE); Aerts, Maarten, 9120 Beveren-Waas (BE); Namboodiri, Vinay, Mumbai 400062 (IN); Six, Erwin, 9270 Kalken (BE)
(74) Representative: ALU Antw Patent Attorneys

(56) References cited:
- WO-A1-2009/067670
- WO-A2-2007/074410
- US-A1- 2005 078 172
- US-A1- 2006 136 846
- US-A1- 2010 188 473
- US-B1- 7 564 476

## Description

The present invention relates to a method and apparatus to enable users participating to a video conference, for having control whether they will be visible or not to other remote users of the video conference system. This relates to providing a possibility to these users to put themselves on "visual mute".

A simple solution to solve this problem is to simply leave the room. But this isn't always adequate because the user may still want to follow the meeting passively, without actively participating to it.

Another solution is that a global human meeting leader manually controls the visual state for each particular participant to the video conference call. This is however also not a feasible solution if many participants are present, or many (de) mute-requests to the system are made.

WO2007/074410 discloses methods and apparatus for providing privacy during video or other communication across a network. In one embodiment, a system is disclosed wherein digital video camera is coupled to a network via a processing server. The digital video camera generates one or more digital images that are processed by the processing server, including identifying and obstructing any artifacts (e.g., faces, hands, etc.) in the images. The processing also optionally includes the tracking of the artifacts in the images as they move within the image, as well as search for new faces that may enter the field of view. In another embodiment video conferencing is performed over a network between two or more users. Images are generated by digital video cameras and processed by video servers. During the videoconference, one or more users may select a video (and audio) muting mode during which any artifacts of interest in the images (or portions thereof) are identified and obscured. Business methods utilizing these capabilities are also disclosed.

US 7 564 476 discloses a video teleconferencing system that (i) determines whether an image frame of a first participant is appropriate for a second participant to the video call and (ii), when the image frame is not appropriate for the video call, alters the image frame to be appropriate for the second participant; before transmission of the image frame to the second participant, it notifies the first participant that the image frame is not appropriate; refocuses a camera receiving an image of the first participant so that the image frame becomes appropriate for the second participant; and/or blocks transmission of the at least one image frame to the second participant.

It is therefore an object of embodiments of the present invention to present a method of the known type but which does not show the aforementioned disadvantages.

According to embodiments of the present invention this object is achieved by a method for adapting video data recorded by a camera on a location during a video conference such as to hide the presence of a participant at said location of said video conference, said method comprising a step of registering a predefined gesture possibly to be performed by any participant of said video conference at said location, a step of detecting said gesture, and upon detection thereof, identifying the at least one participant having performed said gesture at said location , adapting said video data such as to eliminate data relating to said at least one participant having performed said gesture from said video data, thereby generating adapted video data, for being transmitted to other participants of said video conference on other locations.

In this way, an automated and simple solution is provided enabling visual muting of a participant upon detection of this participant performing a predefined gesture, previously registered.

In a variant said predefined gesture is detected by analyzing said video data.

In this variant gesture recognition can be performed via video analysis techniques such as image recognition or the like of the video data itself.

In another variant said predefined gesture is detected by means of receiving a trigger detection signal from and transmitted by an object on which said predefined gesture is performed by said at least one participant.

This variant allows to detect the gesture in an alternative way, by e.g. receiving a signal from an object present at the conference location, such object generally being adapted to communicate with a video conferencing client, and transmit a signal indicative of the gesture being performed by a participant. Upon receipt of such a signal, the video data may be further analyzed for recognizing the conference participant having performed this gesture. Alternatively, in other embodiments, the trigger detection signal itself may already comprise information with respect to the participant having performed the gesture such that the identification of said at least one participant having performed said gesture at said location is performed by analyzing said trigger detection signal from said object.

In an embodiment the video data may be adapted by replacing video data pertaining to said at least one participant with background video data.

This presents a simple way for visual muting of the participant.

The present invention relates as well to embodiments of a video analysis and adaptation device for adapting video data recorded by a camera at a location during a video conference, said video analysis and adaptation device being adapted to receive said video data, to analyze said video data for detecting at least one participant of said video conference in said location having performed a predefined gesture and to, upon detecting of said at least one participant having performed said predefined gesture, perform a step of adapting said video data such as to eliminate data relating to said at least one participant from said video data, thereby generating adapted video data and to provide said adapted video data on an output of said video adaptation device.

In a variant the video adaptation device is able to adapt said video data by replacing video data pertaining to said at least one participant with background video data.

In another variant the video analysis and adaptation device is further adapted to receive a trigger signal indicative of the presence of said predefined gesture, and to upon receipt of said trigger signal, start detecting said at least one participant having performed said predefined gesture.

In another embodiment the video analysis and adaptation device is further adapted to analyze said video data for detecting said predefined gesture, and to upon detection of said predefined gesture, start detecting said at least one participant performing said predefined gesture.

The present invention relates as well to embodiments of a video conferencing client adapted to receive video data from a camera recording a video conference at a location, **characterized in that** said video conferencing client further comprises a video analysis and adaptation device in accordance to any of the claims 6 to 8, said video conferencing client further being adapted to transmit the adapted video data towards at least one other video conferencing client serving other participants of said video conference at at least one other location.

In an embodiment the video conferencing client further comprises registration means being adapted to receive and store user information related to said predefined gesture.

In a variant said user information comprises gesture information performed by a human on an object.

In another embodiment the video conferencing client is further adapted to receive a trigger detection signal from and transmitted by an object on which said predefined gesture is performed by said at least one participant.

In these variants the video conferencing client is adapted to communicate with such an object such as to detect and recognize said predefined gesture.

Any tangible commodity object, e.g. a toaster, a coffee machine,... equipped with a small communication unit and a touch sensor, can be used in such a location such as a meeting room.

The present invention relates as well to embodiments of a video conferencing server, comprising a video analysis and adaptation device in accordance with any of the previous claims 6-8.

The video conferencing server may further be able to receive from respective video conferencing clients the video data of the conference participants in these respective locations.

In a variant these video conferencing clients can also transmit the predefined gesture information towards the server. In other embodiments these predefined gestures can be the same for all clients, and can be centrally stored within the server. In some embodiments the conferencing server communicates said predefined gesture information towards the video conferencing clients in the different locations. For these embodiments, embodiments of the video conferencing clients are adapted to, upon detection of the predefined gesture being performed by a participant, to transmit a signal to the video conferencing server, indicative of the gesture being performed. The server can then further analyze the video images received from this particular client, and adapt the video data accordingly.

The present invention relates as well to a computer program product comprising software adapted to perform the method steps in accordance to any of the claims 1 to 5, when executed on a data-processing apparatus.

It is to be noticed that the term 'coupled', used in the claims, should not be interpreted as being limitative to direct connections only. Thus, the scope of the expression 'a device A coupled to a device B' should not be limited to devices or systems wherein an output of device A is directly connected to an input of device B. It means that there exists a path between an output of A and an input of B which may be a path including other devices or means.

It is to be noticed that the term 'comprising', used in the claims, should not be interpreted as being limitative to the means listed thereafter. Thus, the scope of the expression 'a device comprising means A and B' should not be limited to devices consisting only of components A and B. It means that with respect to the present invention, the only relevant components of the device are A and B.

The above and other objects and features of the invention will become more apparent and the invention itself will be best understood by referring to the following description of an embodiment taken in conjunction with the accompanying drawings wherein:
Fig. 1 shows an exemplary situation of a video conference taking place between n locations, with a distributed video conferencing client architecture
Fig. 2 shows a detailed embodiment of a method for visual muting for a distributed video conferencing client architecture,
Fig. 3 shows a detailed embodiment of a method for visual muting for a client-server video conferencing architecture,
Fig. 4 shows an exemplary situation of a video conference taking place between n locations, with a client/server video conferencing architecture,
Fig. 5 illustrates a first variant for registration of a gesture performed by a conference participant at a particular location,
Fig. 6 illustrates another variant for registration of a gesture performed by m conference participants at a particular location ,
Fig. 7 shows an embodiment of a video conferencing server in the architecture depicted in Fig. 4.

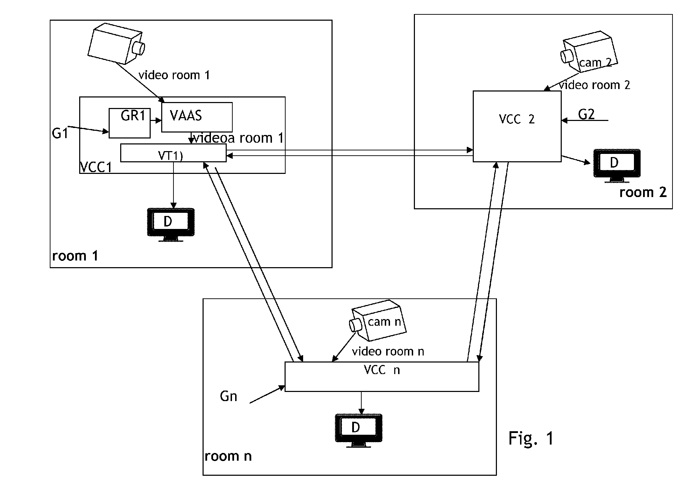

Fig. 1 depicts a situation of a video conference taking place between n different locations, indicated by room1, room2 to room n. Despite the fact that these locations are denoted as rooms, such a location can as well be somewhere outdoors, or in an indoor location which may be different from a "room", e.g. a working floor, a theatre, a garage, etc.. Each location is equipped by one or more video cameras for recording the different participants of the video conference at that particular location. In figure 1 a situation is depicted where each room has one camera, respectively denoted cam1, cam2 to camn. However in other situations several cameras may be used for recording the different participants in one location.

Each of the locations furthermore is equipped with a video conferencing client device, respectively denoted VCC1, VCC2 to VCCn, for the respective locations room 1, room 2 to room n. Such a video conferencing client is adapted to receive the video data recorded by the respective cameras coupled to it, at its respective location, to process the video data e.g. by compressing and encoding the data, or by mixing the data into one composed video in case several cameras are coupled to one video conferencing client, followed by encoding this resulting composed video. The encoded video from one location is then transmitted by the video conferencing client to the other video conferencing clients in the other locations. This also means that a particular video conferencing client, e.g. VCC1, will thus also receive the processed video from locations room 2 to room n and provide these to a display unit D, e.g. a screen at the particular location.

Embodiments of the present invention aim to provide a method for adapting video data recorded by one or more cameras during a video conference at a location such as to hide the presence of a participant of this video conference on this location, upon receiving a trigger by this participant, by means of this participant performing a predetermined gesture. This gesture can be anything, e.g. waving with a left hand, turning a wallet upside down, pushing a chair, turning over or rotating a mobile device equipped with some movement detection and communication capabilities such as a game console, a tablet computer, a cell phone, etc. In one embodiment, where only one gesture is to be used for any participant of a certain location to mute himself/herself, this particular gesture is agreed upon by all participants within a certain location, and is registered by the video conferencing client at this location. In these embodiments each location can have a separate location-specific agreed upon gesture which will trigger the visual mute. Alternatively a video conferencing system with a more centralized approach, may use an initially defined or preconfigured gesture which is the same across all locations. In such situations each of the video conferencing clients may be preconfigured to be triggered by this gesture. In this case the step of registering a predefined gesture possibly to be performed by a participant of the video conference on the particular location, can merely reduce to e.g. the storage of this gesture within the different video conferencing clients. In the earlier described situation, where the participants may initially agree upon the gesture to be recognized per location, the registration of this gesture is to be performed in an initializing step.

In other, more complex embodiments several gestures may be registered, enabling each person to mute him/herself based on a different gesture. In these embodiments the registration procedure will however be more complex.

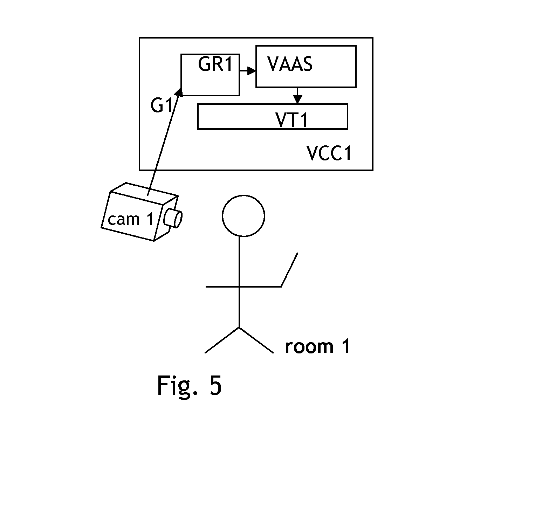

In the embodiment on Fig. 1 where only one common gesture per location is used, the registration of these different gestures is schematically denoted by means of different inputs G1, G2 to Gn, denoting respective gesture information per respective location room1, room2 to roomn, to the respective video conferencing clients VCC1, VCC2 to VCCn in these respective locations. This may comprise recording an act of performing this gesture by any participant by a camera at said location. It is to be remarked that during the registration, only the gesture is to be registered, not the person performing it, unless each person will be enabled to perform a different gesture for his/her muting. In the embodiment of only one gesture enabling the visual mute per location, the recorded video information with a person performing this location-specific gesture, will be provided by the camera to the associated video conferencing client of this location. This is for instance depicted in Fig. 5, where the gesture of waving a hand will be recorded and registered. G1 is then the video information of any person waving his/her hand. In this situation the gesture information G1, for room1, is thus first provided by any participant performing the gesture, and recorded by the camera cam1, which will then forward the images containing the gesture information input to the video conferencing client VCC1.

For the more complex embodiments where each person may use a different gesture for being muted, each of these persons then has to register with his/her particular gesture.

Within the video conferencing client a gesture registration means, denoted GR1 for VCC1, can be present to receive and store such information related to the predefined gesture G1. In the aforementioned embodiments this registration means can thus also receive video information from the camera with the gesture to be recognized later on. However in other embodiments such a separate gesture registration means is not necessary and its functionality can be incorporated within a memory or processing unit of the VCC itself.

In these embodiments, depicted in Figs 1 and 5, with only one common registered gesture per location, which gesture is communicated to the system by means of a video of the predefined gesture, the video conference will start after the registration. The camera will continuously record the video conference, and the images will be continuously analyzed within the VCC, for detecting the particular gesture. Upon detection thereof, the video data is further analyzed to recognize the participant or participants of said video conference at the particular location who are actually performing this gesture. Upon detecting the person(s) performing the particular gesture, visual muting of these people will take place. To accomplish this visual mute, the video data recorded by the camera is adapted such as to eliminate or hide in the recorded video this or these participants. This adaptation may comprise replacing the image pixel data pertaining to these participants with appropriate background video data .

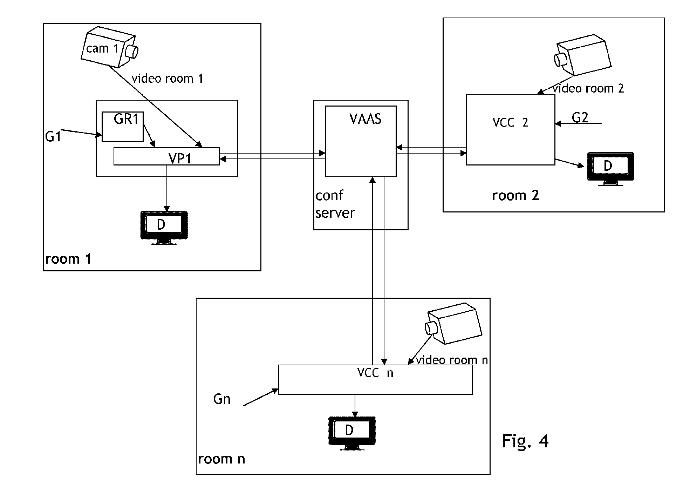

The analysis and adaptation of the conference video data, denoted video room 1 and recorded by the camera, denoted cam 1, in Fig. 1, is performed within a video analysis and adaptation device, denoted VAAS. In the situation of Fig. 1 this video analysis and adaptation device is comprised within the respective video conferencing clients. However in other situations, such as the one depicted in Fig. 4, this video analysis and adaptation device can as well be present in a central video conferencing server. This will be explained more into detail in a later paragraph.

The video analysis and adaptation device, denoted VAAS, is generating adapted video data, for possibly being encoded and being transmitted to other participants on other locations participating to said video conference. In the embodiment depicted in fig. 1, the adapted video is denoted videoa room 1, generated by the VAAS.

For the situation depicted in Fig. 1, upon having adapted the video data of room 1, VAAS will provide the thus adapted video denoted videoa room1, to a transmission unit VT1 of the video conferencing client VCC1. VT1 may perform compression and encoding, and transmit the possibly encoded adapted video data towards the other video conferencing clients VCC2 to VCCn serving other participants of the video conference at the other locations .

Depending upon the gesture itself, its detection can thus be performed by a mere analysis of the conference video data. This is for instance the case if the gesture relates to a gesture to be performed solely by the human body itself, e.g. waving with a hand (as was depicted in Fig. 5), bowing the head etc., or with relation to an object which has no further means of communication such as ticking a part of a wooden table, turning a leather wallet...

Alternatively the predefined gesture may be detected by the presence of a signal transmitted by an object upon being touched by a participant of the video conference. This may for instance be the case if the gesture relates to touching a particular button on a device with some motion sensing and communication capabilities such as a mobile phone, laptop,.. turning a mobile phone or tablet computer, touching a watch with touch screen and communication capabilities such as bluetooth, etc.

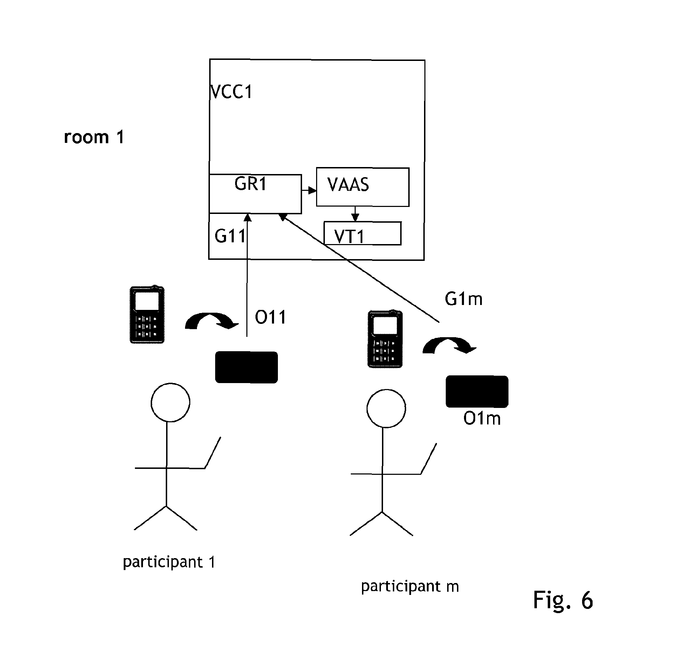

In these situations the predefined gesture can be simply detected by the object itself, e.g. in case this object is equipped with a movement sensor. Upon detection of this gesture, the object will then generate and transmit a particular trigger detection signal to the video conferencing client. In some cases e.g. when each video conferencing client comprises a video analysis and adaptation device VAAS, this object can also directly transmit this trigger detection signal to this VAAS. In such situations the registration of the gesture will then reduce to an initial transmission of such a signal by this particular object to the VCC or VAAS, which will then accordingly store this. This situation is shown in Fig. 6 where turning respective mobile phones O11 to O1 m, upside down by these respective participants 1 to m , will generate respective trigger detection signals G11 to G1 m by these respective mobile phones, which will all be initially communicated from these mobile phones to the VCCs. Alternatively each video conferencing client already may be pre-configured such as to immediately recognize such a signal being transmitted by such an object. In this situation, as each participant 1 to m is linked to his/her particular mobile phone, the trigger detection signal will also comprise information about the person having performed the predefined gesture. This situation is different from the case where e.g. a smart coffee machine can also send a trigger detection signal upon being touched by any participant at the conference location. In these cases a separate detection of the person having performed the particular gesture, is to be performed.

The trigger detection signal can thus be a signal transmitted by the object such as a cell phone, which is generated by this object upon detecting the particular movement by this object (e.g. turning over or turning upside down). In another example it can be signal transmitted by an object e.g. a watch upon detecting, by this watch , that a particular button is pushed, etc. Of course all types of objects having these capabilities can be used to this purpose.

For all such cases, where a gesture detection signal is generated by an object, the video analysis and adaptation device will then only analyze and adapt the video from the camera, upon being triggered by a trigger signal. This trigger signal can either be transmitted from the VCC to the VAAS, which signal is itself generated by the VCC upon having received a trigger detection signal by a touched upon object. Alternatively the trigger signal can be directly received from this object by the VAAS. As previously mentioned, in a decentralized situation, such as depicted in fig. 1, the object can also directly communicate with a VAAS, present in each VCC, and thus directly trigger a VAAS. In more centralized situations, such as depicted in Fig. 4, the object can only communicate with a VCC as this is still decentralized and present per location. VCC will then accordingly provide an additional trigger signal to a VAAS in a server.

In a particular implementation, the object communicating with the video conferencing client can thus be a portable communication device, such as a mobile phone, a laptop, a game console etc. Such devices are then adapted to generate, e.g. before the start of the video conference, a registration request for providing user information related to the predefined gesture possibly performed by a participant, e.g. a gesture of turning this device upside down. The generation of such a registration request then implies a detection of this particular movement by this device, followed by the generation of a particular trigger detection signal to the video conferencing client at the particular location.

In case every participant at that location wants to enjoy this feature, all these devices then need to send their registration signal to the conferencing client This was schematically indicated in fig. 6, where participant 1 to participant m can have his/her cell phone turned upside down, which is followed by the generation of m trigger signals G11 to G1m.

In this embodiment, VAAS will thus immediately recognize the person having performed the gesture, as each person is linked to his/her personal object, with a specific trigger.

In the other embodiments, where there is no direct registration of which mobile phone belongs to which user, and any gesture detection signal from any mobile phone may lead to a visual muting of the person having touched this mobile phone, a detection of the particular person having performed the gesture is still needed, by means of the analysis of the video conferencing data.

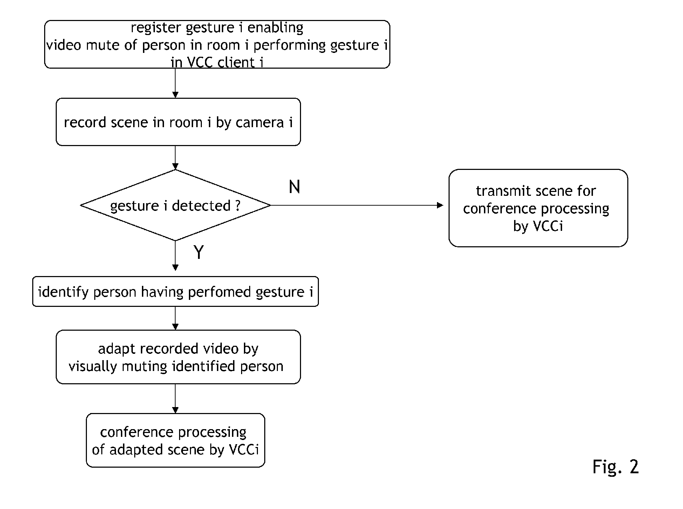

Fig. 2 schematically shows a high level embodiment of the method, for the distributed configuration of fig. 1.

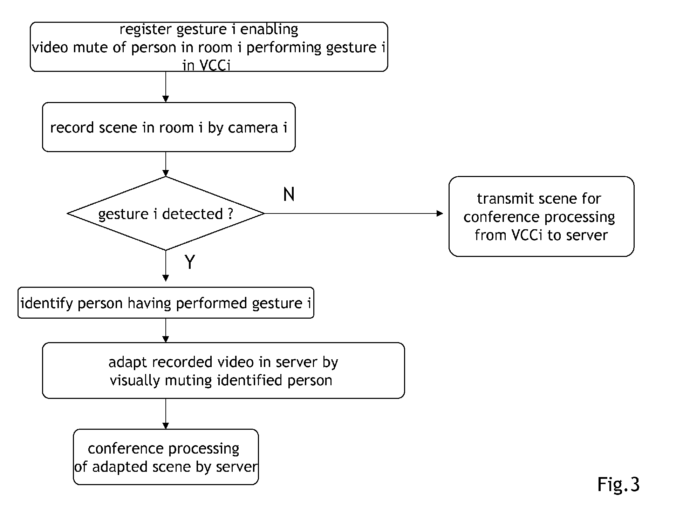

For a more centralized situation, where the VAAS is part of a video conferencing server which is depicted in fig. 4, an embodiment of the method can have the steps as depicted in Fig. 3.

In other embodiments somehow mixed architectures may exist where on one location a video conferencing client will also incorporate the features of a video conferencing server, for the video conferencing clients at the other locations.

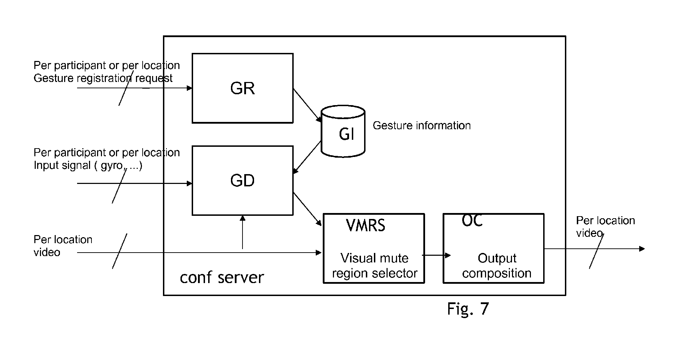

An more detailed embodiment of another embodiment of a video conferencing server is depicted in fig. 7. The video conference server comprises a central gesture registration module, denoted GR, a central gesture detector module GD, a visual mute region selector VMRS, and an output composition module OC. The gesture registration module GR accepts and stores the registered gestures in a central database or memory, denoted by the cylinder block "gesture information" GI. The gesture detection module in the embodiment depicted in Fig. 7 is adapted to received separate gesture input signals, e.g. coming from gyroscopic detectors, coupled to communication units in objects. GD will, upon receipt thereof check whether they correspond with the previously registered gesture information from the memory or database. If it turns out that a particular gesture is present, enabling visual mute of the person having performed this gesture, GD will subsequently analyze this signal, and/or the received video for checking which person actually performed this gesture, if this was not clear from the gesture input signal itself. Once the participant is recognized, this information will be forwarded to the visual mute region selector VMRS, which module will mute the detected participant, from the camera video input received from a particular location. Within module OC the muted or non-muted video inputs from all cameras are again put together to make a general output composed video, which will then again be distributed to the different individual locations.

In yet other embodiments it may even be possible to enable visual muting of a particular person, by another person performing a predefined gesture. In such cases the gesture registration database will contain cross-reference information about which gesture will trigger which person to be muted.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

While the principles of the invention have been described above in connection with specific apparatus, it is to be clearly understood that this description is made only by way of example and not as a limitation on the scope of the invention, as defined in the appended claims. In the claims hereof any element expressed as a means for performing a specified function is intended to encompass any way of performing that function. This may include, for example, a combination of electrical or mechanical elements which performs that function or software in any form, including, therefore, firmware, microcode or the like, combined with appropriate circuitry for executing that software to perform the function, as well as mechanical elements coupled to software controlled circuitry, if any. The invention as defined by such claims resides in the fact that the functionalities provided by the various recited means are combined and brought together in the manner which the claims call for, and unless otherwise specifically so defined, any physical structure is of little or no importance to the novelty of the claimed invention. Applicant thus regards any means which can provide those functionalities as equivalent as those shown herein.

## Claims

1. A method for adapting video data (video room 1) recorded by a camera on a location (room 1) during a video conference such as to hide the presence of a participant at said location of said video conference, said method comprising a step of registering a predefined gesture possibly to be performed by any participant of said video conference at said location (room 1), a step of detecting said gesture, and upon detection thereof, identifying the at least one participant having performed said gesture at said location (room 1), adapting said video data such as to eliminate data relating to said at least one participant having performed said gesture from said video data, thereby generating adapted video data (videoa room 1), for being transmitted to other participants of said video conference on other locations (room 2,..., room n).

2. Method according to claim 1 wherein said predefined gesture (G1) is detected by analyzing said video data (video room 1).

3. Method according to claim 1 wherein said predefined gesture is detected by means of receiving a trigger detection (G11, G1m) signal from and transmitted by an object (O11, O1m) on which said predefined gesture is performed by said at least one participant.

4. Method according to any of the claims 1-3 wherein the identification of said at least one participant having performed said gesture at said location (room 1) is performed by analyzing said video data (video room 1) of said video conference at said location.

5. Method according to claim 3 wherein the identification of said at least one participant having performed said gesture at said location (room 1) is performed by analyzing said trigger detection signal from said object (O11, O1m).

6. Video analysis and adaptation device (VAAS) for adapting video data (video room 1) recorded by a camera (cam1) at a location (room 1) during a video conference, said video analysis and adaptation device (VAAS) being adapted to receive said video data (video room 1), to analyze said video data (video room 1) for detecting at least one participant of said video conference in said location having performed a predefined gesture and to, upon detecting of said at least one participant having performed said predefined gesture, perform a step of adapting said video data (video room 1) such as to eliminate video data relating to said at least one participant from said video data, thereby generating adapted video data (videoa room 1) and to provide said adapted video data (videoa room 1) on an output of said video adaptation device.

7. Video analysis and adaptation device (VAAS) according to claim 6 further being adapted to receive a trigger signal indicative of the presence of said predefined gesture, and to upon receipt of said trigger signal, start detecting said at least one participant having performed said predefined gesture.

8. Video analysis and adaptation device (VAAS) according to claim 6 further being adapted to analyze said video data (video room 1) for detecting said predefined gesture (G1), and to upon detection of said predefined gesture, start detecting said at least one participant performing said predefined gesture.

9. Video conferencing client (VCC1) adapted to receive video data (video room 1) from a camera (cam1) recording a video conference at a location (room 1), **characterized in that** said video conferencing client (VCC1) further comprises a video analysis and adaptation device (VAAS) in accordance to any of the claims 6 to 8 and , said video conferencing client (VCC1) further being adapted to transmit the adapted video data (videoa room 1) towards at least one other video conferencing client (VCC2; VCCn) serving other participants of said video conference at at least one other location (room 2,..., room n).

10. Video conferencing client (VCC1) according to claim 9 further comprising registration means (GR1) being adapted to receive and store user information related to said predefined gesture .

11. Video conferencing client (VCC1) according to claims 9 or 10, further being adapted to receive a trigger detection (G11, G1 m) signal from and transmitted by an object (O11, O1m) on which said predefined gesture is performed by said at least one participant.

12. Video conferencing server, **characterized in that** it comprises a video adaptation device according to any of the previous claims 6-8.

13. A computer program product comprising software adapted to perform the method steps in accordance to any of the claims 1 to 5, when executed on a data-processing apparatus.

## Patentansprüche

1. Verfahren zum Anpassen von Videodaten (video ^{room 1}), die von einer Kamera an einem Ort (^{room 1}) während einer Videokonferenz aufgezeichnet werden, so dass die Anwesenheit von einem Teilnehmer an dem besagten Ort von der besagten Videokonferenz verborgen werden kann, wobei das besagte Verfahren einen Schritt des Erfassens einer vorausdefinierten Geste umfasst, die möglicherweise von einem beliebigen Teilnehmer von der besagten Videokonferenz an dem besagten Ort (^{room 1}) ausgeführt werden muss, einen Schritt des Erkennens der besagten Geste, und nach deren Erkennung, des Identifizierens des mindestens einen Teilnehmers, der die besagte Geste an dem besagten Ort (^{room 1}) ausgeführt hat, des Anpassens der besagten Videodaten, so dass Daten aus den besagten Videodaten beseitigt werden können, die mit dem besagten mindestens einen Teilnehmer zusammenhängen, der die besagte Geste ausgeführt hat, wodurch angepasste Videodaten (^{videoa room 1}) zur Übermittlung an andere Teilnehmer von der besagten Videokonferenz an anderen Orten (^{room 2, ..., room n}) erzeugt werden.

2. Verfahren nach Anspruch 1, wobei die besagte vorausdefinierte Geste (G1) durch Analysieren der besagten Videodaten (^{video room 1}) erkannt wird.

3. Verfahren nach Anspruch 1, wobei die besagte vorausdefinierte Geste mittels Empfang eines Triggererkennungssignals (G11, G1m) von einem und übermittelt durch ein Objekt (O11, O1m) erkannt wird, an dem die besagte vorausdefinierte Geste von dem besagten mindestens einem Teilnehmer durchgeführt wird.

4. Verfahren nach einem beliebigen der Ansprüche 1-3, wobei die Identifikation von dem besagten mindestens einem Teilnehmer, der die besagte Geste an dem besagten Ort (^{room 1}) durchgeführt hat, durch Analysieren der besagten Videodaten (^{video room 1}) von der besagten Videokonferenz an dem besagten Ort durchgeführt wird.

5. Verfahren nach Anspruch 3, wobei die Identifikation von dem besagten mindestens einem Teilnehmer, der die besagte Geste an dem besagten Ort (^{zoom 1}) durchgeführt hat, durch Analysieren des besagten Triggererkennungssignals von dem besagten Objekt (O11, O1m) durchgeführt wird.

6. Videoanalyse- und -anpassungsvorrichtung (VAAS) zum Anpassen von Videodaten (^{video room 1}), die von einer Kamera (cam1) an einem Ort (^{room 1}) während einer Videokonferenz aufgezeichnet werden, wobei die besagte Videoanalyse- und -anpassungsvorrichtung (VAAS) angepasst ist, um die besagten Videodaten (^{video room 1}) zu empfangen, um die besagten Videodaten (video room 1) zum Erkennen von mindestens einem Teilnehmer von der besagten Videokonferenz an dem besagten Ort, der eine vorausdefinierte Geste ausgeführt hat, zu analysieren und um, nach Erkennen des besagten mindestens einen Teilnehmers, der die besagten vorausdefinierte Geste ausgeführt hat, einen Schritt des Anpassens der besagten Videodaten (video room 1) durchzuführen, so dass Videodaten, die mit dem besagten mindestens einen Teilnehmer zusammenhängen, aus den besagten Videodaten beseitigt werden können, wodurch angepasste Videodaten (^{videoa room 1}) erzeugt werden, und die besagten angepassten Videodaten (videoa room 1) an einem Ausgang von der besagten Videoanpassungsvorrichtung bereitgestellt werden können.

7. Videoanalyse- und -anpassungsvorrichtung (VAAS) nach Anspruch 6, wobei sie weiterhin angepasst ist, um ein Triggersignal zu empfangen, das für die Anwesenheit der besagten vorausdefinierten Geste bezeichnend ist, und um, nach Empfang des besagten Triggersignals, das Erkennen des besagten mindestens einen Teilnehmers, der die vorausdefinierte Geste ausgeführt hat, zu starten.

8. Videoanalyse- und -anpassungsvorrichtung (VAAS) nach Anspruch 6, wobei sie weiterhin angepasst ist, um die besagten Videodaten (^{video room 1}) zum Erkennen der besagten vorausdefinierten Geste (G1) zu analysieren, und um, nach Erkennung der besagten vorausdefinierten Geste, das Erkennen des besagten mindestens einen Teilnehmers, der die vorausdefinierte Geste ausgeführt hat, zu starten.

9. Videokonferenz-Client (VCC1), der angepasst ist, um Videodaten (video room 1) von einer Kamera (cam1) zum empfangen, die eine Videokonferenz an einem Ort (^{room 1}) aufzeichnet, **dadurch gekennzeichnet, dass** der besagten Videokonferenz-Client (VCC1) weiterhin eine Videoanalyse- und -anpassungsvorrichtung (VAAS) nach einem beliebigen der Ansprüche 6 bis 8 umfasst, und wobei der besagte Videokonferenz-Client (VCC1) weiterhin angepasst ist, um die angepassten Videodaten (videoa room 1) an mindestens einen anderen Videokonferenz-Client (VCC2; VCCn) zu übermitteln, der anderen Teilnehmern der besagten Videokonferenz an mindestens einem anderen Ort (^{room 2, ..., room n}) dient.

10. Videokonferenz-Client (VCC1) nach Anspruch 9, weiterhin umfassend Erfassungsmittel (GR1), die angepasst sind, um Benutzerinformationen, die mit der besagten vorausdefinierten Geste zusammenhängen, zu empfangen und speichern.

11. Videokonferenz-Client (VCC1) nach Anspruch 9 oder 10, weiterhin angepasst, um ein Triggererkennungssignal (G11, G1m) von einem und übermittelt durch ein Objekt (O11, O1m) zu empfangen, an dem die besagte vorausdefinierte Geste von dem besagten mindestens einem Teilnehmer durchgeführt wird.

12. Videokonferenzserver, **dadurch gekennzeichnet, dass** er eine Videoanpassungsvorrichtung nach einem beliebigen der vorstehenden Ansprüche 6-8 umfasst.

13. Computerprogrammprodukt, umfassend Software, die angepasst ist, um die Verfahrensschritte nach einem beliebigen der Ansprüche 1 bis 5 durchzuführen, wenn sie auf einer Datenverarbeitungsvorrichtung ausgeführt wird.

## Revendications

1. Procédé pour adapter des données vidéo (salle vidéo 1) enregistrées par une caméra sur un emplacement (salle 1) durant une visioconférence de sorte à cacher la présence d'un participant au niveau dudit emplacement de ladite visioconférence, ledit procédé comprenant une étape d'enregistrement d'un geste prédéterminé éventuellement pour être effectué par n'importe quel participant de ladite visioconférence au niveau dudit emplacement (salle 1), une étape de détection dudit geste et, lors de la détection de celui-ci, d'identification de l'au moins un participant ayant effectué ledit geste au niveau dudit emplacement (salle 1), adaptant lesdites données vidéo de sorte à éliminer des données relatives audit au moins un participant ayant effectué ledit geste à partir desdites données vidéo, générant ainsi des données vidéo adaptées (salle vidéoa 1), destinées à être transmises à d'autres participants de ladite visioconférence au niveau d'autres emplacements (salle 2,..., salle n).

2. Procédé selon la revendication 1 dans lequel ledit geste prédéterminé (G1) est détecté par l'analyse desdites données vidéo (salle vidéo 1).

3. Procédé selon la revendication 1 dans lequel ledit geste prédéterminé est détecté au moyen de la réception d'un signal de détection de déclenchement (G11, G1 m) provenant d'un objet et transmis par un objet (O11, O1m) sur lequel ledit geste prédéterminé est effectué par ledit au moins un participant.

4. Procédé selon l'une quelconque des revendications 1 à 3 dans lequel l'identification dudit au moins un participant ayant effectué ledit geste au niveau dudit emplacement (salle 1) est exécutée en analysant lesdites données vidéo (salle vidéo 1) de ladite visioconférence au niveau dudit emplacement.

5. Procédé selon la revendication 3 dans lequel l'identification dudit au moins un participant ayant effectué ledit geste au niveau dudit emplacement (salle 1) est exécutée en analysant ledit signal de détection de déclenchement provenant dudit objet (O11, O1m).

6. Dispositif d'analyse et d'adaptation vidéo (VAAS) pour adapter des données vidéo (salle vidéo 1) enregistrées par une caméra (caméra 1) au niveau d'un emplacement (salle 1) durant une visioconférence, ledit dispositif d'analyse et d'adaptation vidéo (VAAS) étant adapté pour recevoir lesdites données vidéo (salle vidéo 1), pour analyser lesdites données vidéo (salle vidéo 1) pour détecter au moins un participant de ladite visioconférence dans ledit emplacement ayant effectué un geste prédéterminé et, lors de la détection dudit au moins un participant ayant effectué ledit geste prédéterminé, pour exécuter une étape d'adaptation desdites données vidéo (salle vidéo 1) de sorte à éliminer des données vidéo relatives audit au moins un participant à partir desdites données vidéo, générant ainsi des données vidéo adaptées (salle vidéoa 1), et à fournir lesdites données vidéo adaptées (salle vidéoa 1) sur une sortie dudit dispositif d'adaptation vidéo.

7. Dispositif d'analyse et d'adaptation vidéo (VAAS) selon la revendication 6 qui est en outre adapté pour recevoir un signal de déclenchement indiquant la présence dudit geste prédéterminé et pour, lors de la réception dudit signal de déclenchement, lancer la détection dudit au moins un participant ayant effectué ledit geste prédéterminé.

8. Dispositif d'analyse et d'adaptation vidéo (VAAS) selon la revendication 6 qui est en outre adapté pour analyser lesdites données vidéo (salle vidéo 1) pour détecter ledit geste prédéterminé (G1) et pour, lors de la détection dudit geste prédéterminé, lancer la détection dudit au moins un participant effectuant ledit geste prédéterminé.

9. Client de visioconférence (VCC1) adapté pour recevoir des données vidéo (salle vidéo 1) provenant d'une caméra (caméra 1) enregistrant une visioconférence au niveau d'un emplacement (salle 1), **caractérisé en ce que** ledit client de visioconférence (VCC1) comprend en outre un dispositif d'analyse et d'adaptation vidéo (VAAS) selon l'une quelconque des revendications 6 à 8 et, ledit client de visioconférence (VCC1) étant en outre adapté pour transmettre les données vidéo adaptées (salle vidéoa 1) vers au moins un autre client de visioconférence (VCC2 ; VCCn) desservant d'autres participants de ladite visioconférence au niveau d'au moins un autre emplacement (salle 2,..., salle n).

10. Client de visioconférence (VCC1) selon la revendication 9 comprenant en outre des moyens d'enregistrement (GR1) qui sont adaptés pour recevoir et stocker des informations utilisateur relatives audit geste prédéterminé.

11. Client de visioconférence (VCC1) selon la revendication 9 ou 10, qui est en outre adapté pour recevoir un signal de détection de déclenchement (G11, G1m) provenant d'un objet et transmis par un objet (O11, O1m) sur lequel ledit geste prédéterminé est effectué par ledit au moins un participant.

12. Serveur de visioconférence, **caractérisé en ce qu'**il comprend un dispositif d'adaptation vidéo selon l'une quelconque des revendications précédentes 6 à 8.

13. Produit de programme informatique comprenant un logiciel adapté pour exécuter les étapes du procédé selon l'une quelconque des revendications 1 à 5, lorsqu'elles sont exécutées sur un appareil de traitement de données.
